# EUROPEAN PATENT APPLICATION

(11) **EP 4 647 882 A1**
(43) Date of publication of application: **12.11.2025**
(21) Application number: 23914495.9
(22) Date of filing: 15.12.2023
(51) Int. Cl.: G06F 3/0481

(54) **CONTENT INTERACTION METHODS AND APPARATUS, DEVICE, COMPUTER-READABLE STORAGE MEDIUM AND PRODUCT**

(30) Priority: 07.01.2023 CN 202310022396
(71) Applicant: Beijing Zitiao Network Technology Co., Ltd., Beijing 100190 (CN)
(72) Inventor: ZHOU, Zijun, Beijing 100028 (CN); FANG, Mengying, Beijing 100028 (CN)
(74) Representative: Grünecker Patent- und Rechtsanwälte PartG mbB
(86) International application number: PCT/CN2023/139278
(87) International publication number: WO 2024/146361

(57) **Abstract**

Embodiment in the disclosure provide a method for content interaction and apparatus, device, computer readable storage medium and product, and the method including: displaying, in a conversation page between the first user and at least one second user, content to be exchanged sent by any second user, where the content to be exchanged includes a target interaction topic and interaction content in a first display state corresponding to the target interaction topic; displaying a content obtaining page in response to a preconfigured trigger on the content to be exchanged; and switching the interaction content from the first display state to a second display state according to reply content generated based on the target interaction topic in the content obtaining page.

## Description

This application claims the benefit of Chinese Patent Application with application No. 202310022396.9, entitled "Method for Content Interaction, Apparatus, Device, Computer Readable Storage Medium and Product," filed on Jan. 07, 2023, and the entire content of which is incorporated herein by reference.

### FIELD

Embodiments in the disclosure relates to the technical field of interface interaction, in particular to a method for content interaction and apparatus, device, computer readable storage medium and product.

### BACKGROUND

Instant messaging nowadays generally only support content interaction based on voice and text, and interactive manners based on the interaction content are also relatively simple, resulting in poor user interaction effect.

### SUMMARY

Embodiments in the disclosure provide a method for content interaction and apparatus, device, computer readable storage medium and product, and is to solve the technical problem that the interactive manners of existing instant communication functions are relatively simple.

According to a first aspect, an embodiment of the present disclosure provides a method for content interaction, applicable to a client of a first user, including:
displaying, in a conversation page between the first user and at least one second user, content to be exchanged sent by any second user, where the content to be exchanged includes a target interaction topic and interaction content in a first display state corresponding to the target interaction topic;
displaying a content obtaining page in response to a preconfigured trigger on the content to be exchanged; and
switching the interaction content from the first display state to a second display state according to reply content generated based on the target interaction topic in the content obtaining page.

According to a second aspect, an embodiment of the present disclosure provides a content interaction method, applied to a client of a second user, including:
displaying a content generation page in response to a preconfigured trigger in a conversation page with a first user;
obtaining content to be exchanged generated in the content generation page, where the content to be exchanged includes a target interaction topic and interaction content corresponding to the target interaction topic; and
sending the content to be exchanged to the conversation page in response to a sending operation, to cause the second user to switch a display state of the interaction content from a preconfigured first display state to a preconfigured second display state based on reply content generated based on the target interaction topic.

According to a third aspect, an embodiment of the present disclosure provides a content interaction apparatus, applied to a client of a first user, including:
a first displaying module, configured to display, in a conversation page between the first user and at least one second user, content to be exchanged sent by any second user, where the content to be exchanged includes a target interaction topic and interaction content in a first display state corresponding to the target interaction topic;
**an** obtaining module, configured to display a content obtaining page in response to a preconfigured trigger on the content to be exchanged; and
a switching module, configured to switch the interaction content from the first display state to a second display state according to reply content generated based on the target interaction topic in the content obtaining page.

According to a fourth aspect, an embodiment of the present disclosure provides a content interaction apparatus, applied to a client of a second user, including:
a second displaying module, configured to display a content generation page in response to a preconfigured trigger in a conversation page with a first user;
a generation module, configured to obtain content to be exchanged generated in the content generation page, where the content to be exchanged includes a target interaction topic and interaction content corresponding to the target interaction topic; and
a sending module, configured to send the content to be exchanged to the conversation page in response to a sending operation, to cause the second user to switch a display state of the interaction content from a preconfigured first display state to a preconfigured second display state based on reply content generated based on the target interaction topic.

According to a fifth aspect, an embodiment of the present disclosure provides an electronic device, including a processor and a memory;
The memory storing computer executable instructions;
The processor executing the computer executable instruction stored in the memory, so that the at least one processor implements the method for content interaction according to the first aspect and various possible designs of the first aspect or the second aspect and various possible designs of the second aspect.

According to a sixth aspect, an embodiment of the present disclosure provides a computer-readable storage medium, where the computer-readable storage medium stores computer-executable instructions. When the processor executes the computer-executable instructions, the method for content interaction according to the first aspect and the possible designs of the first aspect, or the method for content interaction according to the second aspect and the possible designs of the second aspect is implemented.

According to a seventh aspect, an embodiment of the present disclosure provides a computer program product including a computer program, where the computer program, when executed by a processor, implements the method for content interaction according to the first aspect and the possible designs of the first aspect, or the method for content interaction according to the second aspect and the possible designs of the second aspect.

### BRIEF DESCRIPTION OF DRAWINGS

**In** order to illustrate embodiments in the present disclosure or technical solutions in the prior art more clearly, the accompanying drawings used in the description of the embodiments, or the prior art will be briefly introduced below, and it will be apparent that the drawings in the following description are some embodiments of the present disclosure, and those skilled in the art may also obtain other drawings according to these drawings without creative labor.
FIG. 1 is a schematic flowchart of a method for content interaction according to an embodiment of the present disclosure;
FIG. 2 is a schematic diagram of an interface interaction according to an embodiment of the present disclosure;
FIG. 3 is a schematic diagram of still another interface interaction according to an embodiment of the present disclosure;
FIG. 4 is a schematic diagram of yet another interface interaction according to an embodiment of the present disclosure;
FIG. 5 is a schematic diagram of an interface interaction according to an embodiment of the present disclosure;
FIG. 6 is a schematic flowchart of a method for content interaction according to an embodiment of the present disclosure;
FIG. 7 is a schematic diagram of an interface interaction according to an embodiment of the present disclosure;
FIG. 8 is a schematic diagram of still another interface interaction according to an embodiment of the present disclosure;
FIG. 9 is a schematic diagram of a displaying interface according to an embodiment of the present disclosure;
FIG. 10 is a schematic structural diagram of an apparatus for content interaction according to an embodiment of the present disclosure;
FIG. 11 is a schematic structural diagram of an apparatus for content interaction according to an embodiment of the present disclosure;
FIG. 12 is a schematic structural diagram of an electronic device according to an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. All other embodiments obtained by those skilled in the art based on the embodiments of the present disclosure without creative efforts shall fall within the scope of the present disclosure.

The disclosure provides a method for content interaction and apparatus, device, computer readable storage medium and a product to solve the problem that interactive manners of current instance messaging functions is simple.

It should be noted that the method for content interaction, apparatus, device, computer-readable storage medium, and product provided in the present disclosure may be applied to any instant messaging scenarios.

Current instant messaging functions only support content interaction between users via voice and text, with relatively simple displayed content, not many interactive manners, and poor user interaction effect.

In order to enrich displayed content and interactive manner in the conversation page, the content to be exchanged sent by any second user may be displayed in the conversation page between a first user and the at least one second user, and the content to be exchanged includes a target interaction topic and interaction content in a first display state corresponding to the target interaction topic. Therefore, the first user can generate reply content corresponding to the target interaction topic by triggering the content to be exchanged. Switching the display state of the interaction content from the first display state to a second display state based on the reply content.

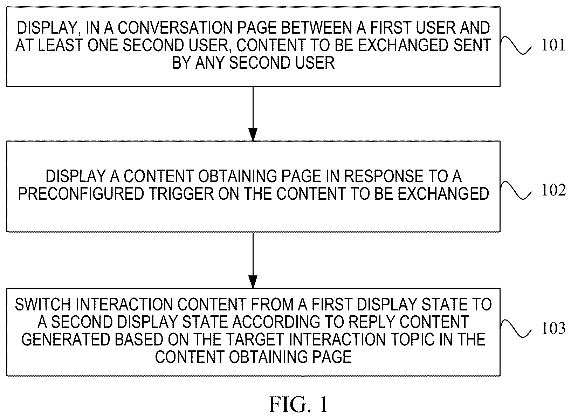

FIG. 1 is a schematic flowchart of a method for content interaction according to an embodiment of the present disclosure.

Step 101: display, in a conversation page between a first user and at least one second user, content to be exchanged sent by any second user, where the content to be exchanged includes a target interaction topic and interaction content in a first display state corresponding to the target interaction topic.

The execution body of this embodiment is an apparatus for content interaction, which may be coupled to the client of the first user, so that the content interaction may be performed based on the trigger by the first user at the client.

In this embodiment, the first user may perform content interaction with the at least one second user on the conversation page. When there is one second user, the conversation page may be a private chat page between the first user and the second user. When there is a plurality of second users, the conversation page may be a group chat page among the first user and the second users.

The second user may generate the content to be exchanged and send the content to be exchanged to the conversation page for the first user to perform the content exchange. The content to be exchanged may include the target interaction topic and the interaction content generated by the second user based on the target interaction topic. For example, in the content to be exchanged sent by the second user, the target interaction topic may be: if you are going to a deserted island and can only bring three things, what would you bring? The interaction content can be the answer generated by the second user based on the target interaction top: hens, props, flints.

Further, to implement the content exchange, in the client of the first user, the interaction content may be displayed in a preconfigured first display state. The first display state may be an unviewable state. For example, the first state may be a fuzzy state, a locked state, a blank state, or the like.

It should be noted that, when the conversation page is the group chat page among the first user and the second users, when a second user generates the content to be exchanged, the identifier of the first user specified by the second user may be associated in the content to be exchanged to perform the content interaction with the specified first user in the group chat. At this time, for the user not specified by the second user in the group chat, the content interaction cannot be performed based on the content to be exchanged.

Step 102: display a content obtaining page in response to a preconfigured trigger by the first user on the content to be exchanged.

In this embodiment, the first user may perform a preconfigured trigger on the content to be exchanged. The preconfigured trigger includes, but is not limited to, a trigger on a certain control in the content to be exchanged, a preconfigured gesture trigger on the content to be exchanged, and the like, which is not limited in the present disclosure. In response to the preconfigured trigger, the first user can jump to the content obtaining page, so that the first user can generate the reply content based on the target interaction topic in the content obtaining page.

Step 103: switching the interaction content from the first display state to the second display state based on the reply content generated by the first user in the content obtaining page based on the target interaction topic.

In this embodiment, after the content obtaining page is displayed, the first user may generate the reply content based on the target interaction topic in the content to be exchanged in the content obtaining page. In response to completion of the reply content triggered by the first user, the interaction content in the content to be exchanged in the conversation page may be switched from the first display state to the second display state. The second display state includes a viewable state. Therefore, after switching the display state of the interaction content in the content to be exchanged, the first user can check the interaction content corresponding to the target interaction topic generated by the first user.

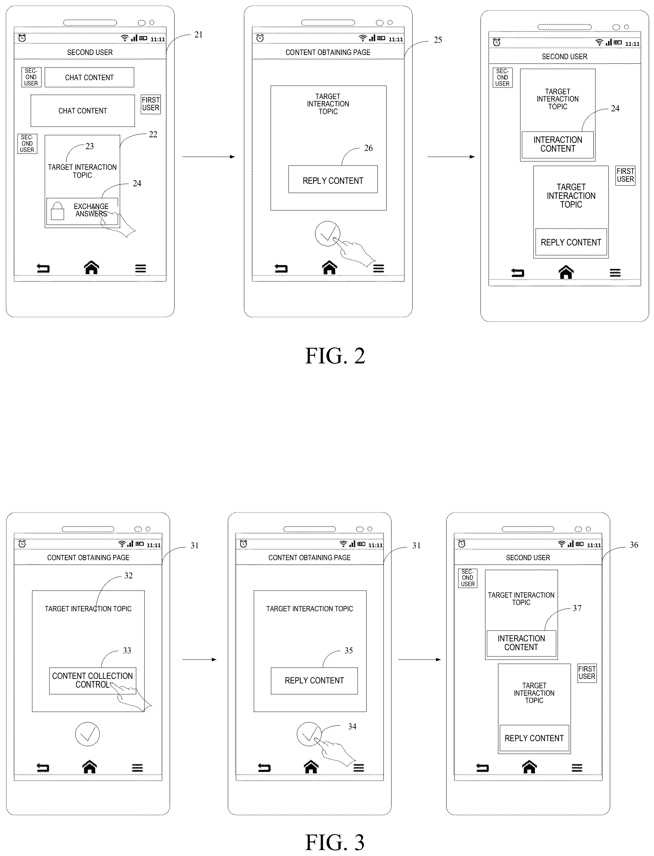

FIG. 2 is a schematic diagram of interface interaction according to an embodiment of the present disclosure. The content to be exchanged 22 includes a target interaction topic 23 and interaction content 24 in a first display state corresponding to the target interaction topic 23. In response to the trigger by the first user on the content to be exchanged 22, the content obtaining page 25 may be displayed. The reply content 26 generated based on the target interaction topic in the content obtaining page 25 by the first user is acquired, and the display state of the interaction content 24 may be switched to the second display state based on the reply content 26.

According to the content interaction method provided by the embodiment, the content to be exchanged sent by any second user is displayed in the conversation page of the first user and the at least one second user, the content obtaining page is displayed in response to the preconfigured trigger of the first user to the content to be exchanged, and the reply content generated by the first user based on the target interaction topic in the content obtaining page is obtained, so that the interaction content can be switched from the first display state to the second display state based on the reply content, the display content in the conversation page is enriched, the interactive manner in the conversation page is enriched, and the user interaction effect is improved.

Further, based on any one of the above embodiments, step 101 includes:
obtaining prompt information associated with the target interaction topic,
displaying, in response to a trigger by the first user on the prompt information, the content to be exchanged sent by any second user in the conversation page between the first user and at least one second user.

In this embodiment, after the second user sends the content to be exchanged to the first user, the client of the first user may obtain and display prompt information associated with the target interaction topic.

In response to the trigger by the first user on the prompt information, the content to be exchanged sent by any second user may be displayed in the conversation page of the first user and the at least one second user.

As an implementable manner, in response to the trigger by the first user on the prompt information, the content display page may be displayed, and the content to be exchanged is displayed in the content display page. The display state of the interaction content in the content to be exchanged is the first display state.

According to the method for content interaction provided in this embodiment, the prompt information associated with the target interaction topic is obtained, so that the content can be quickly jumped to the conversation page based on the prompt information, so as to view the content to be exchanged.

Further, based on any one of the foregoing embodiments, the content to be exchanged includes a preconfigured first interaction control.

Step 102 includes:
displaying the content obtaining page in response to a trigger by the first user on the first interaction control,
displaying the content obtaining page in response to a trigger by the first user on a preconfigured display area in the content to be exchanged.

In this embodiment, the content to be exchanged includes a preconfigured first interaction control. For example, the first interaction control may be displayed on the lower side of the content to be exchanged, and the prompt information of "exchange content" may be displayed on the first interaction control, so that the first user triggers the first interaction control based on the prompt information. In response to the trigger by the first user on the first interaction control, the content obtaining page is displayed, so that the first user can generate reply content associated with the target interaction topic in the content obtaining page.

Optionally, the preconfigured display area in the content to be exchanged may be configured to display the content obtaining page in response to a trigger by the first user. For example, the preconfigured display area may be an upper display area in content to be exchanged. In response to the trigger by the first user to preconfigure the display area in the content to be exchanged, the content obtaining page is displayed, so that the first user can generate the reply content associated with the target interaction topic in the content obtaining page.

According to the method for content interaction provided by the embodiment, the display of the content obtaining page can be realized by triggering the first interaction control or the preconfigured display area in the content to be exchanged, so that the content exchange efficiency can be improved.

Further, based on any one of the foregoing embodiments, the content obtaining page includes the target interaction topic, a preconfigured content collection control, and a preconfigured completion control. Step 103 includes:
obtaining, in response to a trigger by the first user on the content collection control, reply content generated by the first user based on the target interaction topic,
in response to the trigger by the first user on the completion control, sending the reply content to the conversation page, and switching the display state of the interaction content to a preconfigured second display state.

In this embodiment, the content obtaining page includes the target interaction topic, the preconfigured content collection control, and the preconfigured completion control. In response to the trigger by the first user on the content collection control, reply content generated by the first user based on the target interaction topic may be obtained. For example, the content collection control may be a preconfigured input box control, and the first user may input the reply content in the content collection control. Alternatively, in response to the trigger by the first user on the content collection control, one of the plurality of preconfigured replies corresponding to the target interaction topic may be selected as the reply content, which is not limited in the present disclosure.

Further, after the reply content is acquired, the reply content is sent to the conversation page in response to the trigger by the first user on the completion control. Therefore, the display state of the interaction content can be switched to the preconfigured second display state. The first user may view the interaction content in the conversation page.

FIG. 3 is a schematic diagram of still another interface interaction according to an embodiment of the present disclosure, as shown in FIG. 3, the content obtaining page 31 includes a target interaction topic 32, a preconfigured content collection control 33, and a preconfigured completion control 34. In response to the trigger by the first user on the content collection control 33, the reply content 35 generated by the first user based on the target interaction topic may be obtained. In response to the trigger by the first user on the completion control 34, the reply content 35 is sent to the conversation page 36, and the display state of the interaction content 37 is switched to the preconfigured second display state.

According to the content interaction method provided by the embodiment, the content collection control and the completion control are configured in the content obtaining page, so that the generation and the sending of the reply content can be quickly realized based on the control, the content exchange can be quickly realized, and the user interaction effect is improved.

Further, based on any one of the foregoing embodiments, after the obtaining, in response to a trigger by the first user on the content collection control, reply content generated by the first user based on the target interaction topic, the method further includes:
displaying a content presenting page in response to a trigger by the first user on the completion control, where the content presenting page includes the target interaction topic and the interaction content of the second display state.

In this embodiment, after the first user completes the generation of the reply content in the content obtaining page, the preconfigured completion control in the content obtaining page may be triggered. In response to the trigger, the display state of the interaction content may be switched from the first display state to the second display state, to implement the content exchange. Optionally, in response to the trigger, a content presenting page may be displayed. And displaying the interaction content of the target interaction topic and the second display state in the content display page.

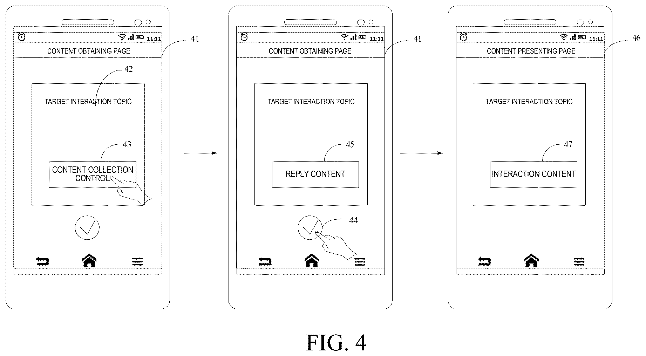

FIG. 4 is a schematic diagram of still another interface interaction according to an embodiment of the present disclosure, as shown in FIG. 4, the content obtaining page 41 includes a target interaction topic 42, a preconfigured content collection control 43, and a preconfigured completion control 44. In response to the trigger by the first user on the content collection control 43, the reply content 45 generated by the first user based on the target interaction topic may be obtained. In response to the trigger by the first user on the completion control 44, the content presenting page 46 is displayed, and the content presenting page 46 includes the target interaction topic 42 and the interaction content 47 of the second display state.

According to the content interaction method provided by the embodiment, the interaction content of the target interaction topic and the second display state is displayed in the content display page in response to the trigger by the first user on the completion control, so that after the reply content is generated and sent, the page jump does not need to be carried out, and the interaction content of the second display state is quickly viewed.

Optionally, based on any one of the foregoing embodiments, the content presenting page includes a preconfigured sharing control;
after displaying the content presenting page in response to the trigger by the first user on the completion control, the method further includes:
generating, in response to a trigger by the first user on the sharing control, content to be shared based on the target interaction topic and the reply content, and displaying a first user list, where the first user list includes identification information of a plurality of user having a preconfigured association with the first user;

In response to a selection of the first user in the first user list, the content to be shared is shared to a conversation page corresponding to at least one target user selected by the first user and reply content in the content to be shared is displayed in a preconfigured first display state in the conversation page.

In this embodiment, after the first user generates the reply content associated with the target interaction topic based on the content to be exchanged, the first user may further generate the content to be shared based on the target interaction topic and the reply content. The content to be shared is shared to other users.

Optionally, the content presenting page includes a preconfigured sharing control. After the first user generates the reply content associated with the target interaction topic based on the content to be exchanged, in response to the trigger by the first user on the shared control, the content to be shared may be generated based on the target interaction topic and the reply content, and the first user list is displayed, where the first user list includes identification information of the plurality of the user having the preconfigured association with the first user.

In response to a selection of the first user in the first user list, the content to be shared is respectively shared to the conversation page corresponding to the at least one target user selected by the first user, where the reply content in the content to be shared is displayed in a preconfigured first display state win the conversation page. Therefore, after obtaining the content to be shared, the target user selected by the first user may continue to generate the exchange content based on the content to be shared, to switch the display state of the reply content.

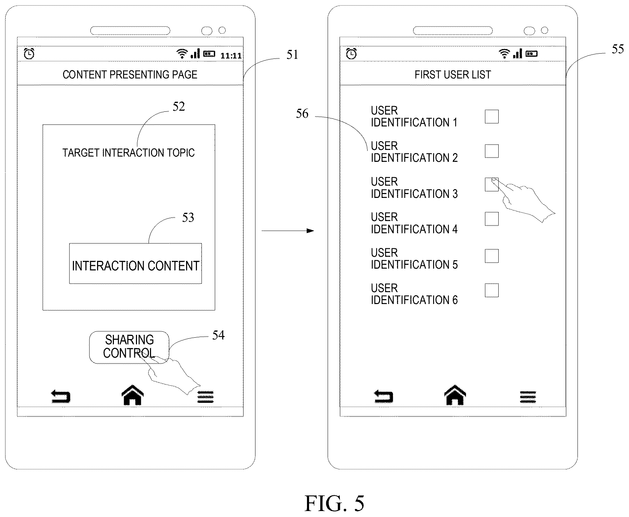

FIG. 5 is a schematic diagram of an interface interaction according to an embodiment of the present disclosure. In response to the trigger by the first user on the sharing control 54, the first user list 55 may be displayed, where the first user list 55 includes identification information 56 of a plurality of users having a preconfigured association with the first user. In response to a selection of the first user in the first user list 55, at least one target user may be determined. Therefore, the content to be shared generated based on the target interaction topic and the reply content can be subsequently shared to the at least one target user.

According to the method for content interaction provided in this embodiment, the sharing control is configured in the content presenting page, so that the first user list can be displayed based on the sharing control, and at least one target user can be determined according to the selection of the first user in the first user list. Therefore, the content to be shared generated by the target interaction topic and the reply content can be respectively shared to at least one target user, the interactive manner in the conversation page is further enriched, and the user interaction effect is improved.

Optionally, based on any one of the foregoing embodiments, a preconfigured second interaction control is displayed in a display area associated with each user in the first user list, and the sharing, in response to a selection of the first user in the first user list, the content to be shared to a conversation page corresponding to at least one target user selected by the first user includes:

in response to a trigger by the first user on a second interaction control associated with at least one user in the first user list, sharing the content to be shared to a conversation page corresponding to the at least one target user selected by the first user.

In this embodiment, a preconfigured second interaction control is displayed in the display area associated with each user in the first user list. After displaying the first user list, in response to the trigger by the first user on the second interaction control associated with the at least one user in the first user list, the content to be shared may be quickly shared to the conversation page corresponding to the at least one target user selected by the first user. Further, each target user may continue to generate the exchange content based on the content to be shared, to switch the display state of the reply content.

According to the content interaction method provided by the embodiment, the preconfigured second interaction control is displayed in the display area associated with each user in the first user list, so that the content to be shared can be quickly shared to the user via the trigger by the first user on the second interaction control corresponding to any user, and the sharing process of the content to be shared is simplified.

Further, based on any one of the foregoing embodiments, after the sending the reply content to the conversation page in response to the trigger by the first user on the completion control, the method further includes:
generating, in response to a preconfigured trigger by the first user on the reply content, content to be shared based on the target interaction topic and the reply content, and displaying a first user list, where the first user list includes identification information of a plurality of user having a preconfigured association with the first user.

In response to a selection of the first user in the first user list, the content to be shared is shared to a conversation page corresponding to at least one target user selected by the first user and reply content in the content to be shared is displayed in a preconfigured first display state in the conversation page.

In this embodiment, after the first user publishes the reply content into the conversation page, the first user may further perform a content sharing based on the reply content displayed in the conversation page.

Optionally, in response to a preconfigured trigger by the first user on the reply content, the content to be shared is generated based on the target interaction topic and the reply content, and the first user list is displayed, where the first user list includes identifier information of a plurality of users having a preconfigured association with the first user. In response to a selection of the first user in the first user list, the content to be shared is shared to the conversation page corresponding to the at least one target user selected by the first user, and the reply content in the content to be shared is displayed in a preconfigured first display state in the conversation page. Therefore, each target user may continue to generate the exchange content based on the content to be shared, to switch the display state of the reply content.

According to the method for content interaction provided by the embodiment, the content to be shared is generated based on the target interaction topic and the reply content in response to the preconfigured trigger by the first user on the reply content in the conversation page, the first user list is displayed, and at least one target user is determined according to the selection of the first user in the first user list. Therefore, the content to be shared generated by the target interaction topic and the reply content can be respectively shared to at least one target user, the interaction mode in the conversation page is further enriched, and the user interaction effect is improved.

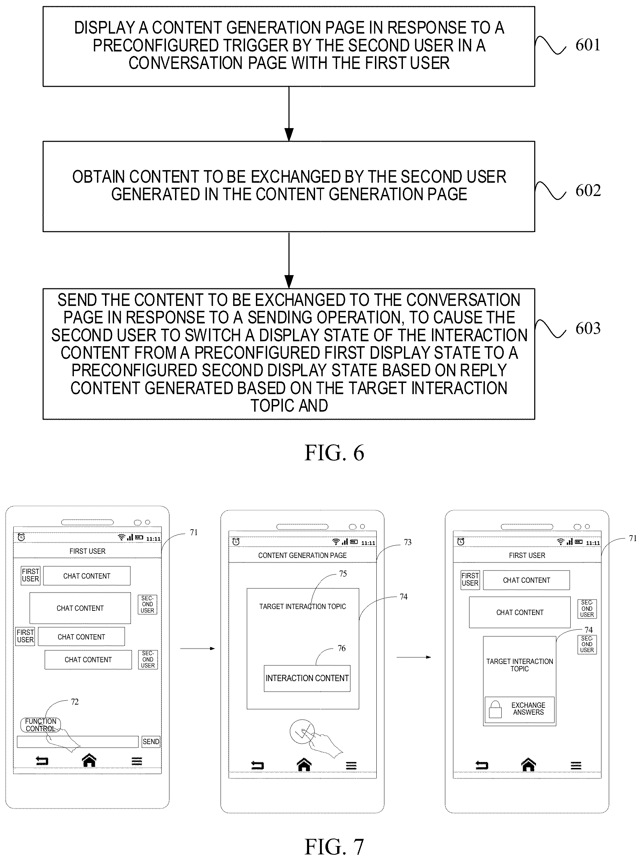

FIG. 6 is a schematic flowchart of a method for content interaction according to an embodiment of the present disclosure.

Step 601: display a content generation page in response to a preconfigured trigger by the second user in the conversation page with a first user.

Step 602: obtain content to be exchanged generated by the second user in the content generation page, where the content to be exchanged includes a target interaction topic and interaction content corresponding to the target interaction topic.

Step 603: in response to a sending operation triggered by the second user, sending the content to be exchanged to the conversation page, to cause the second user to switch a display state of the interaction content from a preconfigured first display state to a preconfigured second display state based on reply content generated based on the target interaction topic.

The execution body of this embodiment is an apparatus for content interaction, which may be coupled to the client of the second user, so that the content exchange can be performed in response to the trigger by the second user.

In this embodiment, the second user can perform information interaction with the first user in the conversation page. Displaying the content generation page in response to a preconfigured trigger by the second user in the conversation page with the first user. The preconfigured trigger of the second user in the conversation page includes, but is not limited to, a trigger on a certain control, a preconfigured gesture, and the like.

After the content generation page is displayed, the second user may generate the content to be exchanged in the content generation page. The content to be exchanged may include a target interaction topic generated by the second user, and interaction content generated by the second user based on the target interaction topic. In response to the sending operation triggered by the second user based on the content to be exchanged, the content to be exchanged may be sent to the conversation page.

It should be noted that, in the conversation page in the client of the second user, the interaction content in the content to be exchanged may be displayed in the first display state, or in the second display state, which is not limited in the present disclosure. Alternatively, in the conversation page in the client of the second user, the interaction content in the content to be exchanged may display content such as the interaction progress corresponding to the content to be exchanged.

In the conversation page of the client of the first user, the interaction content in the content to be exchanged may be displayed in the first display state. Therefore, the first user may generate the reply content based on the target interaction topic and switch the display state of the interaction content from the first display state to the preconfigured second display state according to the reply content.

The first display state is an unviewable state. In the first display state, the first user cannot view the interaction content generated by the second user. The second display state is a viewable state, and in the second display state, the first user can view the interaction content generated by the second user.

FIG. 7 is a schematic diagram of interface interaction according to an embodiment of the present disclosure. The content to be exchanged 74 generated in the content generation page 73 by the second user is obtained, where the content to be exchanged 74 includes the target interaction topic 75 and the interaction content 76 corresponding to the target interaction topic. In response to the sending operation triggered by the second user, the content to be exchanged 74 may be sent to the conversation page 71. Optionally, in the conversation page 71 with the second user, the display state of the exchange content 76 may be the first display state or the second display state.

According to the method for content interaction provided by the embodiment, the content generation page is displayed in response to the preconfigured trigger by the second user in the conversation page with the first user, the content to be exchanged generated by the second user in the content generation page is obtained, and the content to be exchanged is sent to the first user, so that after the first user receives the content to be exchanged, the reply content can be generated based on the target interaction topic corresponding to the content to be exchanged, and the display state of the exchange content is switched from the preconfigured first display state to the preconfigured second display state based on the reply content. The display content and the interactive manner in the conversation page is enriched, and the user interaction effect is improved.

Further, based on any one of the above embodiments, the conversation page includes a trigger control corresponding to the content interaction, and step 101 includes:
displaying the content generation page in response to a trigger by the second user on the trigger control. or
Step 101 includes.
   displaying a preconfigured function list in response to a trigger by the second user on the function control, where the function list at least includes a trigger control corresponding to the content interaction,
   displaying the content generation page in response to a trigger by the second user on the trigger control.

In this embodiment, the conversation page includes a trigger control corresponding to the content interaction. Optionally, the trigger control may be configured at an upper side of the dialog input box. In response to the trigger by the second user on the trigger control, the content generation page may be displayed, and the second user may generate the content to be exchanged in the content generation page.

Optionally, the conversation page may further be provided with a function control. Optionally, the function control may be configured on the right side of the dialogue input box. Displaying a preconfigured function list in response to a trigger by the second user on the function control, where the function list at least includes a trigger control corresponding to the content interaction. In response to the trigger by the second user on the trigger control, the content generation page may be displayed, and the second user may generate the content to be exchanged in the content generation page.

According to the method for content interaction provided in this embodiment, the trigger control corresponding to the content interaction is configured in the conversation page, so that the content generation page can be quickly displayed through the trigger control, so as to perform the generation of the content to be exchanged in the content generation page. Alternatively, by configuring the function control in the conversation page, in response to the trigger by the second user on the function control, the preconfigured trigger control function list corresponding to at least the content interaction can be displayed, so that the content generation page can be quickly displayed through the trigger control, so as to perform the generation of the content to be exchanged in the content generation page.

Further, based on any one of the foregoing embodiments, the content generation page includes a first generation control for generating a target interaction topic and a second generation control for generating the interaction content. Step 102 includes:
generating the target interaction topic in response to a trigger by the second user on the first generation control,
obtaining, in response to the trigger by the second user on the second generation control, the interaction content generated by the second user based on the target interaction topic.

In this embodiment, the content generation page includes the first generation control for generating the target interaction topic and the second generation control for generating the interaction content. In response to the trigger by the second user on the first generation control, the target interaction topic may be generated.

After the target interaction topic is generated, in response to the trigger by the second user on the second generation control, the interaction content generated by the second user based on the target interaction topic is obtained.

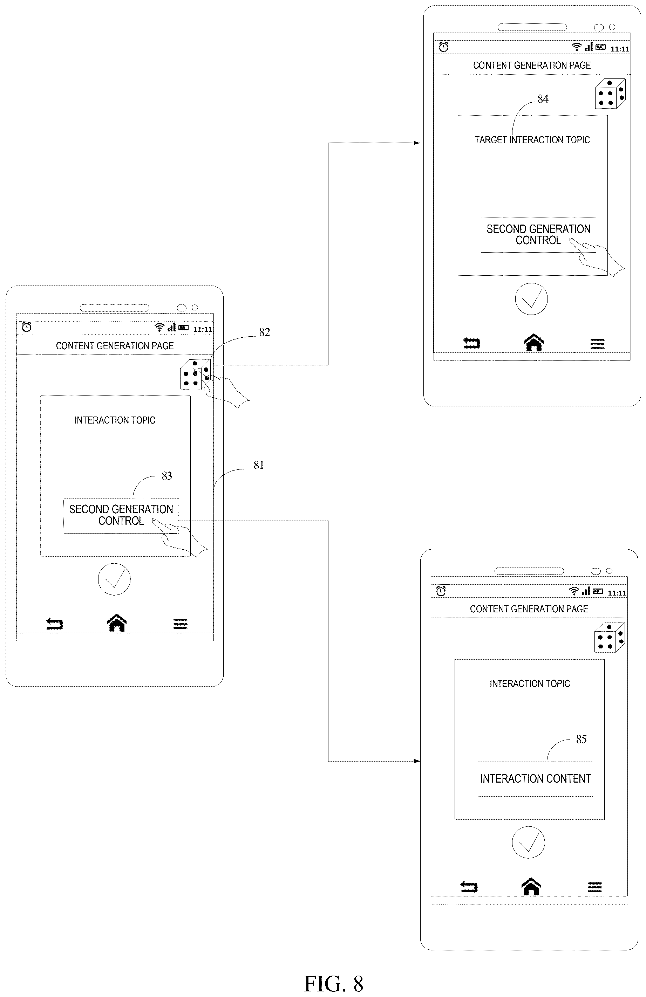

FIG. 8 is a schematic diagram of still another interface interaction according to an embodiment of the present disclosure, as shown in FIG. 8, the content generation page 81 includes a first generation control 82 for generating a target interaction topic and a second generation control 83 for generating interaction content. In response to the trigger by the first user on the first generation control 82, the target interaction topic 84 may be generated. In response to the trigger by the second user on the second generation control 83, the interaction content 85 generated by the second user based on the target interaction topic is obtained.

According to the method for content interaction provided in this embodiment, the first generation control for generating the target interaction topic and the second generation control for generating the interaction content are configured in the content generation page respectively, so that the generation of the content to be exchanged can be quickly implemented based on the first generation control and the second generation control. The interactive manner in the content generation page is enriched, and the generation efficiency of the content to be exchanged is improved.

Optionally, based on any one of the foregoing embodiments, the generating the target interaction topic in response to a trigger by the second user on the first generation control includes:
in response to the trigger by the second user on the first generation control, a target interaction topic input by the second user via a preconfigured input control is obtained. or
the content generation page further includes a switching control, and the generating the target interaction topic in response to the trigger by the second user on the first generation control includes:
displaying any preconfigured interaction topic in response to a trigger by the second user on the first generating control.

In response to the trigger by the second user on the first generation control, switching the currently displayed interaction topic based on the preconfigured interaction topic until the second user stops triggering the first generation control to obtain the target interaction topic.

In this embodiment, the first generation control may include an input control, and in response to the trigger by the second user on the first generation control, the target interaction topic input by the second user via the preconfigured input control may be obtained. Therefore, the second user can manually input the target interaction topic more conforming to the personalized demand.

Optionally, the first generation control may include a selection control, and the selection control may be configured to select an interaction topic from a plurality of preconfigured interaction topics for display in response to a trigger by the second user.

Further, in response to the trigger by the second user on the first generation control, any preconfigured interaction topic may be displayed. If the second user is not satisfied with the currently displayed interaction topic, the switching of the interaction topic may be implemented by triggering the first generating control again. Until the second user stops triggering the first generation control, the currently displayed interaction topic is determined as the target interaction topic.

According to the method for content interaction provided in this embodiment, the target interaction topic is generated based on the content input by the second user through the input control, so that the generated target interaction topic is more consistent with the personalized requirement of the second user. In addition, the first generation control is preconfigured, so that the target interaction topic can be determined in the preconfigured interaction topic based on the first generation control, the interactive manner in the content generation page is enriched, and the generation efficiency of the target interaction topic is improved.

Optionally, the preconfigured interaction topic includes at least a plurality of interaction topics associated with respective specific occasions.

In this embodiment, interaction topics associated with different specific occasions may be preconfigured. The specific occasion includes, but is not limited to, Spring Festival, Middle-Autumn Festival, Dragon Boat Festival, and the like. For example, when a particular occasion is the Spring Festival, the interaction topic may include: What did you eat for the New Year's Eve dinner? When the specific occasion is Mid-Autumn Festival, the interactive topic can include: What kind of mooncake filling do you like? When the specific occasion is Dragon Boat Festival, the interactive topic can include: Do you like sweet or salty rice dumplings?

Therefore, based on the interaction topic associated with respective specific occasions, the second user can be provided with more options of the interaction topic associated with the specific occasion when the current date matches the specific occasion.

Further, based on any one of the above embodiments, the displaying any preconfigured interaction topic in response to a trigger by the second user on the first generating control includes:
determining a particular occasion corresponding to the current date.
displaying, in response to a trigger of the second user on the first generation control, any preconfigured interaction topic associated with the specific occasion, and displaying a display background associated with the specific occasion.

In this embodiment, after the interaction topics associated with respective specific occasions is preconfigured, when the second user performs the generation of the target interaction topic through the first generation control, the interaction topic associated with the specific occasion may be preferentially displayed.

Optionally, a specific occasion corresponding to the current date may be determined. When the current occasion matches any specific occasion, randomly displaying any preconfigured interaction topic associated with the specific occasion in response to a trigger by the second user on the first generating control. If the currently displayed interaction topic does not meet the personalized demand of the second user, the second user may switch the currently displayed interaction topic through the trigger on the first generated control. As an implementable manner, when the number of switching occasions reaches the preconfigured threshold, the preconfigured interaction topic associated with the specific occasion may be stopped, and the preconfigured common interaction topic not associated with the specific occasion is displayed.

Further, in order to enrich the display effect of the content generation page, in response to the trigger by the second user on the first generation control, the display background associated with the specific occasion may also be displayed when any preconfigured interaction topic associated with the specific occasion is displayed. For example, if the specific occasion corresponding to the current date is the Spring Festival, the interaction topic associated with the Spring Festival and the display background associated with the Spring Festival may be displayed. As an implementable manner, the display background associated with the Spring Festival may be a red background, with the Spring Festival related elements such as fireworks, crackers, lanterns and the like displayed.

According to the method for content interaction provided by the embodiment, a plurality of interaction topics associated with respective specific occasions are preconfigured, so that a preconfigured interaction topic associated with the specific occasion and a display background associated with the specific occasion can be displayed according to the specific occasion corresponding to the current occasion, the display content of the content generation page is further enriched, the display effect in the content generation page is optimized, and the user interaction effect is improved.

Further, based on any one of the above embodiments, after the randomly displaying any preconfigured interaction topic in response to the trigger of the second user on the first generation control, the method further includes:
displaying a display background corresponding to the interaction topic,
switching the current display background in response to the trigger by the second user on the switching control.

In this embodiment, after any preconfigured interaction topic is randomly displayed in response to the trigger by the second user on the first generation control, a display background corresponding to the interaction topic may be displayed. To further enrich the display effect in the content generation page, in response to the trigger by the second user on the switching control, the currently displayed interaction topic may be switched, and the current display background may be synchronously switched.

Colors and/or patterns of display backgrounds corresponding to different interaction topics are different.

According to the method for content interaction provided in this embodiment, the display background corresponding to the interaction topic is displayed. The current display background is switched in response to the trigger by the second user on the switching control, so that the display effect in the content generation page can be further enriched, and the user interaction effect is improved.

Further, based on any one of the foregoing embodiments, the content generation page includes a preconfigured sending control. Step 603 includes:
sending the content to be exchanged to the conversation page in response to a trigger by the second user on the sending control.

In this embodiment, the content generation page includes a preconfigured sending control. When the second user completes the editing of the content to be exchanged, the content to be exchanged may be sent to the conversation page by triggering the sending control. Therefore, the interaction content in the content to be exchanged can be displayed in the first display state in the client of the first user.

Further, based on any one of the foregoing embodiments, the content generation page further includes a preconfigured third interaction control.

After step 602, the method further includes:
displaying a preconfigured second user list in response to a trigger by the second user on the third interaction control, where the second user list includes identification information of a plurality of users having a preconfigured association with the second user,
determining at least one user to be interacted selected by the second user in response to a selection of the second user in the second user list,
in response to a trigger by the second user on a preconfigured sending control in the second user list, sending the content to be exchanged to a conversation page corresponding to each user to be interacted, respectively.

In this embodiment, the content generation page further includes a preconfigured third interaction control, and the second user may share the content to be exchanged to more users based on the third interaction control.

Optionally, in response to a trigger by the second user on the third interaction control, a preconfigured second user list is displayed, where the second user list includes identification information of a plurality of users having a preconfigured association with the second user. In response to a selection of the second user in the second user list, at least one user to be interacted selected by the second user is determined. In response to the trigger by the second user on the preconfigured sending control in the second user list, the content to be exchanged is separately sent to the conversation page corresponding to each user to be interacted. Therefore, after obtaining the content to be exchanged, each user to be interacted may generate reply content based on the content to be exchanged and switch the display state of the interaction content in the content to be exchanged according to the reply content.

According to the method for content interaction provided by the embodiment, the third interaction control is configured in the content generation page, so that the content to be exchanged can be quickly shared to at least one user to be interacted based on the third interaction control, and the exchange efficiency of the content to be exchanged is improved.

Further, based on any one of the above embodiments, after step 603, the method further includes:
determining an exchange progress corresponding to the content to be exchanged,
displaying progress prompt information corresponding to the exchange progress according to the exchange progress.

In this embodiment, in order to make the second user more intuitively know the current exchange progress, the prompt information may be displayed in real time when there is an update in the exchange progress of the content to be exchanged.

Optionally, the exchange progress corresponding to the content to be exchanged sent by the second user may be determined. The exchange progress may include that the first user does not send the reply content based on the content to be exchanged, the first user sends the reply content based on the content to be exchanged, the first user initiates a new content exchange, and the like.

Further, after the content to be exchanged is sent, the exchange progress corresponding to the content to be exchanged may be determined. Displaying progress prompt information corresponding to the exchange progress according to the exchange progress. The progress prompt information may be displayed in the form of a pop-up window, or in an aggregated message prompt manner, and the display form of the progress prompt information is not limited in the present disclosure.

According to the method for content interaction provided in this embodiment, the exchange progress corresponding to the content to be exchanged is determined. The progress prompt information corresponding to the exchange progress is displayed according to the exchange progress, so that the second user can more intuitively know the current exchange progress, and the user interaction effect is improved.

Further, based on any one of the above embodiments, after step 603, the method further includes:
displaying the message page in response to a trigger by the second user on a trigger control corresponding to the message page,
displaying the message reminder information corresponding to the exchange progress in the display area associated with the first user in the message page according to the exchange progress corresponding to the content to be exchanged.

In this embodiment, the target application provided with the instant messaging function may include a plurality of different pages. For example, the target application may include a message page, and the message page may be displayed with a chat content list of the second user and at least one user that has an association with the second user. In order to enable the second user more intuitively understand the exchange progress of the content to be exchanged sent to the first user or each of the associated with the second user, the message reminding information corresponding to the exchange progress may be displayed in the chat content list.

Optionally, the message page is displayed in response to a trigger by the second user on a trigger control corresponding to the message page. Displaying the message reminder information corresponding to the exchange progress in the display area associated with the first user in the message page according to the exchange progress corresponding to the content to be exchanged.

For example, when the exchange progress is that the first user does not send the reply content based on the content to be exchanged, the message prompt information may be: delivered, and the content to be exchanged is sent. When the exchange progress is that the first user sends the reply content based on the content to be exchanged, the message prompt information may be that the first user has exchanged the content with you. When the exchange progress is that the user with the association with the second user sends the content to be exchanged to the second user, the message prompt information may be: inviting you to exchange content.

According to the method for content interaction provided by the embodiment, the exchange progress corresponding to the content to be exchanged is determined, and the message reminding information corresponding to the exchange progress is displayed in the message page, so that the second user does not need to open the conversation page, and the exchange progress corresponding to the plurality of first users can be more intuitively understood in the message page, and the user interaction effect is improved.

Further, based on any one of the above embodiments, after step 603, the method further includes:
determining any interaction of the user having an association with the second user on the interaction content corresponding to the content to be exchanged and displaying interaction reminder information corresponding to the interaction.

The interaction includes at least one of like, collect, and comment.

In this embodiment, after sending the content to be exchanged to the conversation page in response to the sending operation triggered by the second user, the user having the association with the second user may perform an interaction on the content to be exchanged, where the interaction includes at least one of like, collect, and comment.

In order to enable the second user to know the interaction of the other users on the content to be exchanged in time, it may be determined that any user having an association with the second user performs an interaction on the interaction content corresponding to the content to be exchanged and displays the interaction reminder information corresponding to the interaction.

According to method for the content interaction provided in this embodiment, the interaction reminder information corresponding to the interaction is displayed by determining the interaction of any user with the association with the second user on the interaction content corresponding to the content to be exchanged, so that the second user can learn about the current interaction condition of the content to be exchanged timelier.

Further, based on any one of the above embodiments, after step 603, the method further includes:
determining first interaction information corresponding to the content to be exchanged, where the first interaction information is generated after the at least one first user performs an interaction on the content to be exchanged,
displaying the content to be exchanged and first interaction information corresponding to the content to be exchanged in the content presenting page and/or the conversation page.

The interaction includes at least one of like, collect, and comment.

In this embodiment, after the first user generates the content to be exchanged and sends the content to be exchanged to the conversation page, or the content to be shared is shared to the at least one user to be interacted, the first user and the at least one user to be interacted may interact with the content to be exchanged according to actual requirements. The interaction includes at least one of like, collect, and comment.

Further, the first interaction information corresponding to the content to be exchanged may be determined, where the first interaction information is generated after the at least one first user performs an interaction on the content to be exchanged. Displaying the content to be exchanged and the first interaction information corresponding to the content to be exchanged in the content presenting page and/or the conversation page.

For example, the first interaction information may be displayed in a display area associated with content to be exchanged in the conversation page. The display area associated with the content to be exchanged may be the lower side of the content to be exchanged, or the second user may adjust the display position of the first interactive information according to an actual demand, which is not limited in the present disclosure.

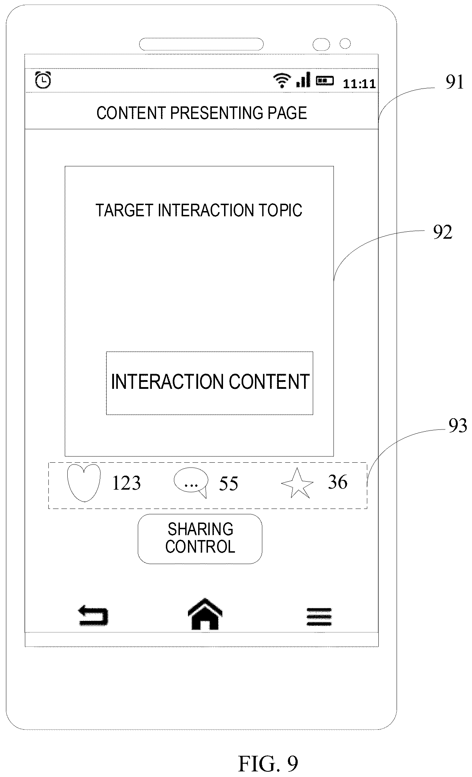

FIG. 9 is a schematic diagram of a display interface according to an embodiment of the present disclosure.

According to the content interaction method provided in this embodiment, the first interaction information corresponding to the content to be exchanged is determined, and the first interaction information is displayed in the content presenting page and/or the conversation page, so that the second user can more intuitively understand the interaction associated with the content to be exchanged in the content presenting page and/or in the conversation page, thereby improving the user interaction effect.

Further, based on any one of the above embodiments, the method further includes:
displaying, in the conversation page, reply content generated by the first user based on the content to be exchanged,
determining second interaction information corresponding to the reply content, where the second interaction information is generated after at least one user having a preconfigured association with the first user performs an interaction on the reply information,
displaying the reply content and the second interaction information corresponding to the reply content in the content presenting page and/or the conversation page.

The interaction includes at least one of like, collect, and comment.

In this embodiment, after the first user generates the reply content associated with the target interaction topic based on the content to be exchanged, the reply content may be displayed in the conversation page. After the first user sends the reply content to the conversation page or shares the user with the preconfigured association with the first user, the second user or the user having the preconfigured association with the first user may trigger the interaction on the reply content. The interaction includes at least one of like, collect, and comment.

Further, second interaction information corresponding to the reply content may be determined, where the second interaction information is generated after the at least one user having the preconfigured association with the first user performs an interaction on the reply information. Displaying the reply content and the second interaction information corresponding to the reply content in the content presenting page and/or the conversation page.

For example, the second interaction information may be displayed in a display area associated with the reply content in the conversation page. Optionally, the number corresponding to the like, the collection, and the comment may be separately displayed for the second user to view. Alternatively, a preconfigured interaction information viewing control may be displayed, and in response to the trigger by the second user on the interaction information viewing control, the number corresponding to the likes, the collects, and the comments is respectively displayed.

According to the method for content interaction provided by the embodiment, the second interaction information corresponding to the reply content is determined, and the reply content and the second interaction information corresponding to the reply content are displayed in the content display page and/or the conversation page, so that the interaction condition associated with the reply content can be more intuitively understood in the content display page and/or the conversation page, the display content in the content display page and/or the conversation page is further enriched, and the user interaction effect is improved.

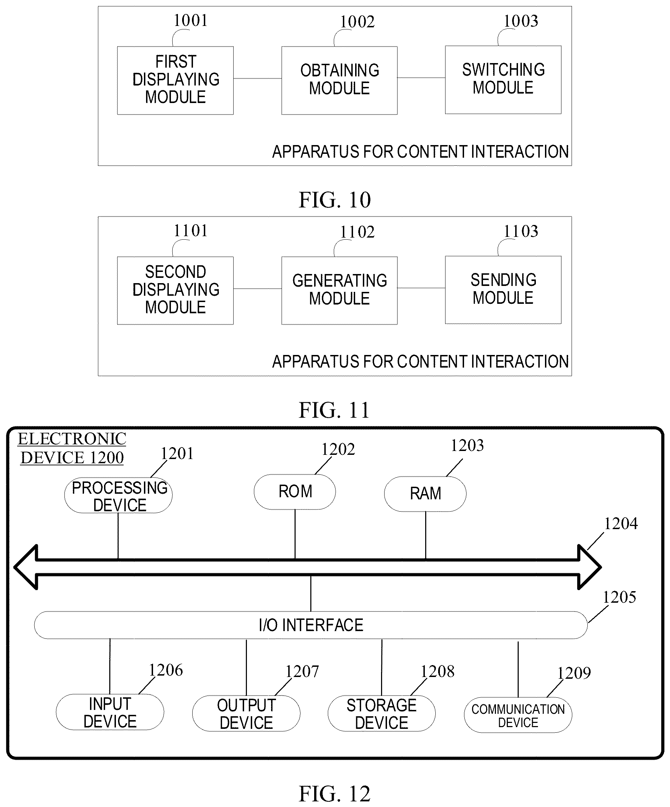

As shown in FIG. 10, an apparatus includes a first displaying module 1001, an obtaining module 1002, and a switching module 1003. The first displaying module 1001 is configured to display, in a conversation page of a first user and at least one second user, content to be exchanged sent by any second user, where the content to be exchanged includes a target interaction topic and interaction content in a first display state corresponding to the target interaction topic. An obtaining module 1002, configured to display a content obtaining page in response to a preconfigured trigger by the first user on the content to be exchanged. The switching module 1003 is configured to switch the interaction content from the first display state to a second display state based on reply content generated by the first user in the content obtaining page based on the target interaction topic.

Further, based on any one of the foregoing embodiments, the content to be exchanged includes a preconfigured first interaction control. The first displaying module is configured to display the content obtaining page in response to a trigger by the first user on the first interaction control. Displaying the content obtaining page in response to a trigger by the first user on a preconfigured display area in the content to be exchanged.

Further, based on any one of the foregoing embodiments, the content obtaining page includes the target interaction topic, a preconfigured content collection control, and a preconfigured completion control. The switching module is configured to: in response to a trigger by the first user on the content collection control, obtain reply content generated by the first user based on the target interaction topic. In response to the trigger by the first user on the completion control, sending the reply content to the conversation page, and switching the display state of the interaction content to a preconfigured second display state.

Further, based on any one of the foregoing embodiments, the apparatus further includes: a first displaying module, configured to display a content presenting page in response to a trigger by the first user on the completion control, where the content presenting page includes the target interaction topic and the interaction content of the second display state.

Further, based on any one of the above embodiments, the content presenting page includes a preconfigured sharing control. The apparatus further includes: a first displaying module, configured to generate, in response to a trigger by the first user on the sharing control, content to be shared based on the target interaction topic and the reply content, and display a first user list, where the first user list includes identification information of a plurality of users having a preconfigured association with the first user. A sharing module, configured to, in response to a selection of the first user in the first user list, share the content to be shared to a conversation page corresponding to at least one target user selected by the first user, where the reply content in the content to be shared is displayed in a preconfigured first display state in the conversation page.

Further, based on any one of the foregoing embodiments, a preconfigured second interaction control is displayed in a display area associated with each user in the first user list, and the sharing module is configured to: in response to a trigger by the first user on a second interaction control associated with at least one user in the first user list, share the content to be shared to a conversation page corresponding to the at least one target user selected by the first user.

Further, based on any one of the foregoing embodiments, the apparatus further includes: a first displaying module, configured to generate, in response to a preconfigured trigger by the first user on the reply content, content to be shared based on the target interaction topic and the reply content, and display a first user list, where the first user list includes identification information of a plurality of users having a preconfigured association with the first user. A sharing module, configured to, in response to a selection of the first user in the first user list, share the content to be shared to a conversation page corresponding to at least one target user selected by the first user, where the reply content in the content to be shared is displayed in a preconfigured first display state in the conversation page.

Further, based on any one of the above embodiments, the first displaying module is configured to obtain prompt information associated with the target interaction topic. Displaying, in response to a trigger by the first user on the prompt information, content to be exchanged sent by any second user in a conversation page of the first user and at least one second user.

As shown in FIG. 11, the apparatus includes a second displaying module 1101, a generation module 1102, and a sending module 1103. The second displaying module 1101 is configured to display the content generation page in response to a preconfigured trigger by the second user in a conversation page with the first user. The generation module 1102 is configured to obtain content to be exchanged generated by the second user in the content generation page, where the content to be exchanged includes a target interaction topic and interaction content corresponding to the target interaction topic. A sending module 1103, configured to send the content to be exchanged to the conversation page in response to a sending operation triggered by the second user, so that the second user switches a display state of the interaction content from a preconfigured first display state to a preconfigured second display state based on the target interaction topic generation reply content.

Further, based on any one of the foregoing embodiments, the conversation page includes a trigger control corresponding to a content interaction, and the second displaying module is configured to: in response to a trigger by the second user on the trigger control, display the content generation page. Alternatively, the second displaying module is configured to: displaying a preconfigured function list in response to a trigger by the second user on the function control, where the function list at least includes a trigger control corresponding to the content interaction. Displaying the content generation page in response to a trigger by the second user on the trigger control.

Further, based on any one of the foregoing embodiments, the content generation page includes a first generation control for generating a target interaction topic and a second generation control for generating the interaction content. The generation module is configured to generate the target interaction topic in response to a trigger by the second user on the first generation control. In response to the trigger by the second user on the second generation control, obtaining the interaction content generated by the second user based on the target interaction topic.

Further, based on any one of the foregoing embodiments, the generation module is configured to: in response to a trigger by the second user on the first generation control, obtain a target interaction topic input by the second user via a preconfigured input control. Alternatively, the content generation page further includes a switching control, and the generating the target interaction topic in response to the trigger by the second user on the first generation control includes: displaying any preconfigured interaction topic in response to the trigger by the second user on the first generation control. In response to the trigger by the second user on the first generation control, switching the currently displayed interaction topic based on the preconfigured interaction topic until the second user stops triggering the first generation control to obtain the target interaction topic.

Further, based on any one of the above embodiments, the preconfigured interaction topic includes at least a plurality of interaction topics associated with respective specific occasions.

Further, based on any one of the above embodiments, the generating module is configured to determine a specific occasion corresponding to the current date. Displaying, in response to a trigger by the second user on the first generation control, any preconfigured interaction topic associated with the specific occasion, and displaying a display background associated with the specific occasion.

Further, based on any one of the above embodiments, the apparatus further includes: a second displaying module, configured to display a display background corresponding to the interaction topic. A switching module, configured to switch the current display background in response to a trigger by the second user on the switching control.

Further, based on any one of the foregoing embodiments, the sending module is configured to: in response to a trigger by the second user on the sending control, send the content to be exchanged to the conversation page.

Further, based on any one of the foregoing embodiments, the content generation page further includes a preconfigured third interaction control. The apparatus further includes: a second displaying module, configured to display a preconfigured second user list in response to a trigger by the second user on the third interaction control, where the second user list includes identification information of a plurality of users having a preconfigured association with the second user. A determining module, configured to determine at least one user to be interacted selected by the second user in response to a selection of the second user in the second user list. A sending module, configured to send the content to be exchanged to a conversation page corresponding to each user to be interacted, in response to a trigger by the second user on a preconfigured sending control in the second user list.

Further, based on any one of the foregoing embodiments, the apparatus further includes: a determining module, configured to determine an exchange progress corresponding to the content to be exchanged. A second displaying module, configured to display, according to the exchange progress, progress prompt information corresponding to the exchange progress.

Further, based on any one of the above embodiments, the apparatus further includes: a second displaying module, configured to display the message page in response to a trigger by the second user on a trigger control corresponding to the message page. The processing module is further configured to display, in the display area associated with the first user in the message page, message reminder information corresponding to the exchange progress according to the exchange progress corresponding to the content to be exchanged.

Further, based on any one of the foregoing embodiments, the apparatus further includes: a determining module, configured to determine any interaction on the interaction content corresponding to the content to be exchanged by a user having an association with the second user, and display interaction reminder information corresponding to the interaction. The interaction includes at least one of like, collect, and comment.

Further, based on any one of the foregoing embodiments, the apparatus further includes: a determining module, configured to determine first interaction information corresponding to the content to be exchanged, where the first interaction information is generated after the at least one first user performs an interaction on the content to be exchanged. A second displaying module, configured to display the content to be exchanged and the first interaction information corresponding to the content to be exchanged in the content presenting page and/or the conversation page. The interaction includes at least one of like, collect, and comment.

Further, based on any one of the above embodiments, the apparatus further includes: a second displaying module, configured to display, in the conversation page, reply content generated by the first user based on the content to be exchanged. A determining module, configured to determine second interaction information corresponding to the reply content, where the second interaction information is generated after at least one user having a preconfigured association with the first user performs an interaction on the reply information. A displaying module, configured to display the reply content and second interaction information corresponding to the reply content in the content presenting page and/or the conversation page. The interaction includes at least one of like, collect, and comment.

The device provided in this embodiment may be configured to perform the technical solutions in the foregoing method embodiments, and implementation principles and technical effects thereof are similar, and details are not described herein again in this embodiment.

In order to implement the foregoing embodiments, an embodiment of the present disclosure further provides an electronic device, including: a processor and a memory,
the memory stores computer-executable instructions,
the processor executes the computer executable instruction stored in the memory, so that the processor is configured with the content interaction method according to any one of the above embodiments.

FIG. 12 is a schematic structural diagram of an electronic device according to an embodiment of the present disclosure. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 12 is merely an example and should not impose any limitation on the functions and scope of use of the embodiments of the present disclosure.

As shown in FIG. 12, the electronic device 1200 may include a processing device (for example, a central processing unit, a graphics processor, etc.) 1201, which may perform various appropriate actions and processing according to a program stored in a read only memory (ROM) 1202 or a program loaded into a random access memory (RAM) 1203 from a storage device 1208. In the RAM 1203, various programs and data required by the operation of the electronic device 1200 are also stored. The processing device 1201, the ROM 1202, and the RAM 1203 are connected to each other through a bus 1204. Input/output (I/O) interface 1205 is also connected to bus 1204.

Generally, the following devices may be connected to the I/O interface 1205: an input device 1206 including, for example, a touch screen, a touch pad, a keyboard, a mouse, a camera, a microphone, an accelerometer, a gyroscope, etc. ; an output device 1207 including, for example, a liquid crystal display (LCD), a speaker, a vibrator, etc. ; a storage device 1208 including, for example, a magnetic tape, a hard disk, etc. ; and a communication device 1209. The communication device 1209 may allow the electronic device 1200 to communicate wirelessly or wired with other devices to exchange data. While FIG. 12 shows an electronic device 1200 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program embodied on a computer readable medium, the computer program including program code for performing the method shown in the flowchart. In such embodiments, the computer program may be downloaded and installed from the network through the communication device 1209, or installed from the storage device 1208, or from the ROM 1202. When the computer program is executed by the processing apparatus 1201, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to wires, optical cables, RF (radio frequency), and the like, or any suitable combination of the foregoing.

An embodiment of the present disclosure further provides a computer-readable storage medium, where the computer-readable storage medium stores a computer-executable instruction, and when the processor executes the computer-executable instruction, the content interaction method according to any one of the foregoing embodiments is implemented.

An embodiment of the present disclosure further provides a computer program product, including a computer program, where the computer program is executed by a processor to configure the content interaction method according to any one of the foregoing embodiments.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object-oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or in hardware. For example, the first obtaining unit may be further described as "obtaining at least two units of Internet Protocol addresses".

The functions described above may be performed, at least in part, by one or more hardware logic components. For example, without limitation, exemplary types of hardware logic components that may be used include field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to a first aspect, an embodiment of the present disclosure provides a method for content interaction applicable to a client of a first user, including:
displaying, in a conversation page between a first user and at least one second user, content to be exchanged sent by any second user, where the content to be exchanged includes a target interaction topic and interaction content in a first display state corresponding to the target interaction topic;
displaying a content obtaining page in response to a preconfigured trigger by the first user on the content to be exchanged;
switching the interaction content from the first display state to a second display state based on reply content generated by the first user in the content obtaining page based on the target interaction topic.

According to one or more embodiments of the present disclosure, the content to be exchanged includes a preconfigured first interaction control;
the displaying a content obtaining page in response to a preconfigured trigger by the first user on the content to be exchanged includes:
displaying the content obtaining page in response to a trigger by the first user on the first interaction control; or displaying the content obtaining page in response to a trigger by the first user on a preconfigured display area in the content to be exchanged.

According to one or more embodiments of the present disclosure, the content obtaining page includes the target interaction topic, a preconfigured content collection control, and a preconfigured completion control; and the switching the interaction content from the first display state to the second display state based on the reply content generated by the first user in the content obtaining page based on the target interaction topic includes:
obtaining, in response to a trigger by the first user on the content collection control, reply content generated by the first user based on the target interaction topic;
in response to the trigger by the first user on the completion control, sending the reply content to the conversation page, and switching the display state of the interaction content to a preconfigured second display state.

According to one or more embodiments of the present disclosure, after obtaining the reply content generated by the first user based on the target interaction topic in response to the trigger by the first user on the content collection control, the method further includes:
displaying a content presenting page in response to a trigger by the first user on the completion control, where the content presenting page includes the target interaction topic and the interaction content in the second display state.

According to one or more embodiments of the present disclosure, the content presenting page includes a preconfigured sharing control;
after displaying the content presenting page in response to the trigger by the first user on the completion control, the method further includes:
generating, in response to a trigger by the first user on the sharing control, content to be shared based on the target interaction topic and the reply content, and displaying a first user list, where the first user list includes identification information of a plurality of users having a preconfigured association with the first user;
in response to a selection of the first user in the first user list, sharing the content to be shared to a conversation page corresponding to at least one target user selected by the first user, and displaying the reply content in the content to be shared in a preconfigured first display state in the conversation page.

According to one or more embodiments of the present disclosure, a preconfigured second interaction control is displayed in a display area associated with each user in the first user list, and the sharing, in response to a selection of the first user in the first user list, the content to be shared to a conversation page corresponding to at least one target user selected by the first user includes:
in response to a trigger by the first user on a second interaction control associated with at least one user in the first user list, sharing the content to be shared to a conversation page corresponding to the at least one target user selected by the first user.

According to one or more embodiments of the present disclosure, after the sending the reply content to the conversation page in response to the trigger by the first user on the completion control, the method further includes:
generating, in response to a preconfigured trigger by the first user on the reply content, content to be shared based on the target interaction topic and the reply content, and displaying a first user list, where the first user list includes identification information of a plurality of users having a preconfigured association with the first user; and
in response to a selection of the first user in the first user list, sharing the content to be shared to a conversation page corresponding to at least one target user selected by the first user, and displaying the reply content in the content to be shared in a preconfigured first display state in the conversation page.

According to one or more embodiments of the present disclosure, the displaying, in a conversation page of a first user and at least one second user, content to be exchanged sent by any second user includes:
obtaining prompt information associated with the target interaction topic;
displaying, in response to a trigger by the first user on the prompt information, the content to be exchanged sent by any second user in a conversation page of the first user and at least one second user.

According to a second aspect, a method for content interaction is provided according to one or more embodiments of the present disclosure, applicable to a client of a second user, including:
displaying a content generation page in response to a preconfigured trigger of the second user in a conversation page with a first user;
obtaining content to be exchanged generated by the second user in the content generation page, where the content to be exchanged includes a target interaction topic and interaction content corresponding to the target interaction topic;
sending the content to be exchanged to the conversation page in response to a sending operation triggered by the second user, to cause the second user to switch the display state of the interaction content from a preconfigured first display state to a preconfigured second display state based on reply content generated based on the target interaction topic.

According to one or more embodiments of the present disclosure, the conversation page includes a trigger control corresponding to the content interaction, and the displaying the content generation page in response to a preconfigured trigger by the second user in the conversation page with the first user includes:
displaying the content generation page in response to a trigger by the second user on the trigger control; or
the conversation page includes a preconfigured function control, and the displaying the content generation page in response to a preconfigured trigger of the second user in the conversation page with the first user includes:
   displaying a preconfigured function list in response to a trigger by the second user on the function control, where the function list at least includes a trigger control corresponding to the content interaction;
   displaying the content generation page in response to a trigger by the second user on the trigger control.

According to one or more embodiments of the present disclosure, the content generation page includes a first generation control for generating a target interaction topic and a second generation control for generating the interaction content; the obtaining content to be exchanged generated by the second user in the content generation page includes:
generating the target interaction topic in response to a trigger by the second user on the first generation control;
in response to the trigger by the second user on the second generation control, obtaining the interaction content generated by the second user based on the target interaction topic.

According to one or more embodiments of the present disclosure, the generating the target interaction topic in response to a trigger by the second user on the first generation control includes:
obtaining, in response to a trigger by the second user on the first generation control, a target interaction topic input by the second user via a preconfigured input control; or
the content generation page further includes a switching control, and the generating the target interaction topic in response to the trigger by the second user on the first generation control includes:
   displaying any preconfigured interaction topic in response to a trigger by the second user on the first generating control;
   in response to the trigger of the second user on the first generation control, switching the currently displayed interaction topic based on the preconfigured interaction topic until the second user stops triggering the first generation control to obtain the target interaction topic.

According to one or more embodiments of the present disclosure, the preconfigured interaction topic includes at least a plurality of interaction topics associated with respective specific occasions.

According to one or more embodiments of the present disclosure, the displaying any preconfigured interaction topic in response to a trigger of the second user on the first generating control includes:
determining a specific occasion corresponding to the current date;
displaying, in response to a trigger of the second user on the first generation control, any preconfigured interaction topic associated with the specific occasion, and displaying a display background associated with the specific occasion.

According to one or more embodiments of the present disclosure, after the randomly displaying any preconfigured interaction topic in response to the trigger of the second user on the first generated control, the method further includes:
displaying a display background corresponding to the interaction topic;
switching the current display background in response to the trigger of the second user on the switching control.

According to one or more embodiments of the present disclosure, the content generating page includes a preconfigured sending control; and the sending the content to be exchanged to the conversation page in response to the sending operation triggered by the second user includes:
sending the content to be exchanged to the conversation page in response to a trigger by the second user on the sending control.

According to one or more embodiments of the present disclosure, the content generation page further includes a preconfigured third interaction control;
after the obtaining content to be exchanged generated by the second user in the content generation page, the method further includes:
displaying a preconfigured second user list in response to a trigger by the second user on the third interaction control, where the second user list includes identification information of a plurality of users having a preconfigured association with the second user;
determining at least one user to be interacted selected by the second user in response to a selection operation of the second user in the second user list;
in response to a trigger by the second user on a preconfigured sending control in the second user list, sending the content to be exchanged to a conversation page corresponding to each user to be interacted, respectively.

According to one or more embodiments of the present disclosure, after the sending the content to be exchanged to the conversation page in response to the sending operation triggered by the second user, the method further includes:
determining an exchange progress corresponding to the content to be exchanged;
displaying progress prompt information corresponding to the exchange progress according to the exchange progress.

According to one or more embodiments of the present disclosure, after the sending the content to be exchanged to the conversation page in response to the sending operation triggered by the second user, the method further includes:
displaying the message page in response to a trigger of the second user on a trigger control corresponding to the message page;
displaying the message reminder information corresponding to the exchange progress in the display area associated with the first user in the message page according to the exchange progress corresponding to the content to be exchanged.

According to one or more embodiments of the present disclosure, after the sending the content to be exchanged to the conversation page in response to the sending operation triggered by the second user, the method further includes:
determining any interaction of the user having an association with the second user on the interaction content corresponding to the content to be exchanged, and displaying interaction reminder information corresponding to the interaction;
The interaction includes at least one of like, collect, and comment.

According to one or more embodiments of the present disclosure, after the sending the content to be exchanged to the conversation page in response to the sending operation triggered by the second user, the method further includes:
determining first interaction information corresponding to the content to be exchanged, where the first interaction information is generated after the at least one first user performs an interaction on the content to be exchanged;
displaying the content to be exchanged and first interaction information corresponding to the content to be exchanged in the content presenting page and/or the conversation page;
The interaction includes at least one of like, collect, and comment.

According to one or more embodiments of the present disclosure, the method further includes:
displaying, in the conversation page, reply content generated by the first user based on the content to be exchanged;
determining second interaction information corresponding to the reply content, where the second interaction information is generated after at least one user having a preconfigured association with the first user performs an interaction on the reply information;
displaying the reply content and second interaction information corresponding to the reply content in the content presenting page and/or the conversation page;
the interaction includes at least one of like, collect, and comment.

According to a third aspect, an apparatus for content interaction is provided according to one or more embodiments of the present disclosure, applied to a client of a first user, including:
a first displaying module, configured to display, in a conversation page of a first user and at least one second user, content to be exchanged sent by any second user, where the content to be exchanged includes a target interaction topic and interaction content in a first display state corresponding to the target interaction topic;
an obtaining module, configured to display a content obtaining page in response to a preconfigured trigger by the first user on the content to be exchanged;
a switching module, configured to switch the interaction content from the first display state to the second display state based on reply content generated by the first user in the content obtaining page based on the target interaction topic.

According to one or more embodiments of the present disclosure, the content to be exchanged includes a preconfigured first interaction control;
the first displaying module is configured to:
display the content obtaining page in response to a trigger by the first user on the first interaction control; or display the content obtaining page in response to a trigger by the first user on a preconfigured display area in the content to be exchanged.

According to one or more embodiments of the present disclosure, the content obtaining page includes the target interaction topic, a preconfigured content collection control, and a preconfigured completion control; and the switching module is configured to:
obtain, in response to a trigger by the first user on the content collection control, reply content generated by the first user based on the target interaction topic;
in response to the trigger by the first user on the completion control, send the reply content to the conversation page, and switch the display state of the interaction content to a preconfigured second display state.

According to one or more embodiments of the present disclosure, the apparatus further includes:
a first displaying module, configured to display a content presenting page in response to a trigger by the first user on the completion control, where the content presenting page includes the target interaction topic and the interaction content of the second display state.

According to one or more embodiments of the present disclosure, the content presenting page includes a preconfigured sharing control;
the apparatus further includes:
a first displaying module, configured to generate, in response to a trigger by the first user on the sharing control, content to be shared based on the target interaction topic and the reply content, and display a first user list, where the first user list includes identification information of a plurality of users having a preconfigured association with the first user; and
a sharing module, configured to, in response to a selection of the first user in the first user list, share the content to be shared to a conversation page corresponding to at least one target user selected by the first user, where the reply content in the content to be shared is displayed in a preconfigured first display state in the conversation page.

According to one or more embodiments of the present disclosure, a preconfigured second interaction control is displayed in a display area associated with each user in the first user list, and the sharing module is configured to:
In response to a trigger by the first user on a second interaction control associated with at least one user in the first user list, sharing the content to be shared to a conversation page corresponding to the at least one target user selected by the first user.

According to one or more embodiments of the present disclosure, the apparatus further includes:
a first displaying module, configured to generate, in response to a preconfigured trigger by the first user on the reply content, content to be shared based on the target interaction topic and the reply content, and display a first user list, where the first user list includes a plurality of user identification information that has a preconfigured association relationship with the first user; and
a sharing module, configured to, in response to a selection of the first user in the first user list, share the content to be shared to a conversation page corresponding to at least one target user selected by the first user, where the reply content in the content to be shared is displayed in a preconfigured first display state in the conversation page.

According to one or more embodiments of the present disclosure, the first displaying module is configured to:
obtain prompt information associated with the target interaction topic;
display, in response to a trigger by the first user on the prompt information, content to be exchanged sent by any second user in a conversation page of the first user and at least one second user.

According to a fourth aspect, an apparatus for content interaction is provided according to one or more embodiments of the present disclosure, applied to a client of a second user, including:
a second displaying module, configured to display a content generation page in response to a preconfigured trigger of the second user in a conversation page with the first user;
a generation module, configured to obtain content to be exchanged generated by the second user in the content generation page, where the content to be exchanged includes a target interaction topic and interaction content corresponding to the target interaction topic;
a sending module, configured to send the content to be exchanged to the conversation page in response to a sending operation triggered by the second user, to cause the second user to switch a display state of the interaction content from a preconfigured first display state to a preconfigured second display state based on reply content generated based on the target interaction topic.

According to one or more embodiments of the present disclosure, the conversation page includes a trigger control corresponding to a content interaction, and the second displaying module is configured to:
display the content generation page in response to a trigger by the second user on the trigger control; or

The second displaying module is configured to:
display a preconfigured function list in response to a trigger by the second user on the function control, where the function list at least includes a trigger control corresponding to the content interaction;
display the content generation page in response to a trigger by the second user on the trigger control.

According to one or more embodiments of the present disclosure, the content generation page includes a first generation control for generating a target interaction topic and a second generation control for generating the interaction content; the generation module is configured to:
generate the target interaction topic in response to a trigger by the second user on the first generation control;
in response to the trigger by the second user on the second generation control, obtain the interaction content generated by the second user based on the target interaction topic.

According to one or more embodiments of the present disclosure, the generating module is configured to:
obtain, in response to a trigger by the second user on the first generation control, a target interaction topic input by the second user via a preconfigured input control; or
the content generation page further includes a switching control, and the generating the target interaction topic in response to the trigger by the second user on the first generation control includes:
   displaying any preconfigured interaction topic in response to a trigger by the second user on the first generating control;
   in response to the trigger by the second user on the first generation control, switching the currently displayed interaction topic based on the preconfigured interaction topic until the second user stops triggering the first generation control to obtain the target interaction topic.

According to one or more embodiments of the present disclosure, the preconfigured interaction topic includes at least a plurality of interaction topics associated with respective specific occasions.

According to one or more embodiments of the present disclosure, the generating module is configured to:
determine a specific occasion corresponding to the current date;
display, in response to a trigger by the second user on the first generation control, any preconfigured interaction topic associated with the specific occasion, and displaying a display background associated with the specific occasion.

According to one or more embodiments of the present disclosure, the apparatus further includes:
a second displaying module, configured to display a display background corresponding to the interaction topic;
a switching module, configured to switch the current display background in response to a trigger by the second user on the switching control.

According to one or more embodiments of the present disclosure, the sending module is configured to:
send the content to be exchanged to the conversation page in response to a trigger by the second user on the sending control.

According to one or more embodiments of the present disclosure, the content generation page further includes a preconfigured third interaction control;
the apparatus further includes:
a second displaying module, configured to display a preconfigured second user list in response to a trigger by the second user on the third interaction control, where the second user list includes identification information of a plurality of users having a preconfigured association with the second user;
a determining module, configured to determine at least one user to be interacted selected by the second user in response to a selection of the second user in the second user list;
a sending module, configured to send the content to be exchanged to a conversation page corresponding to each user to be interacted, in response to a trigger by the second user on a preconfigured sending control in the second user list.

According to one or more embodiments of the present disclosure, the apparatus further includes:
a determining module, configured to determine an exchange progress corresponding to the content to be exchanged;
a second displaying module, configured to display, according to the exchange progress, progress prompt information corresponding to the exchange progress.

According to one or more embodiments of the present disclosure, the apparatus further includes:
a second displaying module, configured to display the message page in response to a trigger by the second user on a trigger control corresponding to the message page;
the processing module is further configured to display, in the display area associated with the first user in the message page, message reminder information corresponding to the exchange progress according to the exchange progress corresponding to the content to be exchanged.

According to one or more embodiments of the present disclosure, the apparatus further includes:
a determining module, configured to determine an interaction of any user having an association with the second user on the interaction content corresponding to the content to be exchanged, and display interaction reminder information corresponding to the interaction;
The interaction includes at least one of like, collect, and comment.

According to one or more embodiments of the present disclosure, the apparatus further includes:
a determining module, configured to determine first interaction information corresponding to the content to be exchanged, where the first interaction information is generated after at least one first user performs an interaction on the content to be exchanged;
a second displaying module, configured to display the content to be exchanged and first interaction information corresponding to the content to be exchanged in the content presenting page and/or the conversation page;
the interaction includes at least one of like, collect, and comment.

According to one or more embodiments of the present disclosure, the apparatus further includes:
a second displaying module, configured to display, in the conversation page, reply content generated by the first user based on the content to be exchanged;
a determining module, configured to determine second interaction information corresponding to the reply content, where the second interaction information is generated after at least one user having a preconfigured association with the first user performs an interaction on the reply information;
a displaying module, configured to display the reply content and second interaction information corresponding to the reply content in the content presenting page and/or the conversation page;
the interaction includes at least one of like, collect, and comment.

According to a fifth aspect, an electronic device is provided according to one or more embodiments of the present disclosure, including: at least one processor and a memory;
the memory storing computer executable instructions;
the at least one processor executes the computer-executable instruction stored in the memory, so that the at least one processor executes the method for content interaction according to the first aspect and various possible designs of the first aspect, or the method for content interaction according to the second aspect and various possible designs of the second aspect.

According to a sixth aspect, a computer-readable storage medium is provided according to one or more embodiments of the present disclosure, where the computer-readable storage medium stores computer-executable instructions, and when the processor executes the computer-executable instruction, the method for content interaction according to the first aspect and the possible designs of the first aspect, or the method for content interaction according to the second aspect and the possible designs of the second aspect is implemented.

According to a seventh aspect, a computer program product is provided, including a computer program, where when the computer program is executed by a processor, the method for content interaction according to the first aspect and the possible designs of the first aspect, or the method for content interaction according to the second aspect and the possible designs of the second aspect is implemented.

The above description is merely an illustration of the preferred embodiments of the present disclosure and the principles of the applied technology. It should be understood by those skilled in the art that the disclosure in the present disclosure is not limited to the technical solutions of the specific combination of the above technical features and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and / or methodological acts, it is to be understood that the subject matter defined in the appended claims is not necessarily limited to the specific features or acts described above. Rather, the specific features and acts described above are merely exemplary forms of implementing the claims.

## Claims

1. A method for content interaction, applicable to a client of a first user, **characterized by** comprising:
displaying, in a conversation page between the first user and at least one second user, content to be exchanged sent by any second user, wherein the content to be exchanged comprises a target interaction topic and interaction content in a first display state corresponding to the target interaction topic;
displaying a content obtaining page in response to a preconfigured trigger on the content to be exchanged; and
switching the interaction content from the first display state to a second display state according to reply content generated based on the target interaction topic in the content obtaining page.

2. The method of claim 1, **characterized in that** the content to be exchanged comprises a preconfigured first interaction control;
wherein display the content obtaining page in response to the preconfigured trigger on the content to be exchanged comprises:
displaying the content obtaining page in response to a trigger on the first interaction control; or displaying the content obtaining page in response to a trigger on a preconfigured display area in the content to be exchanged.

3. The method of claim 1, **characterized in that** the content obtaining page comprises the target interaction topic, a preconfigured content collection control, and a preconfigured completion control; and the switching the interaction content from the first display state to the second display state according to the reply content generated based on the target interaction topic in the content obtaining page comprises:
in response to a trigger on the content collection control, obtaining the reply content generated based on the target interaction topic; and
in response to a trigger on the completion control, sending the reply content to the conversation page, and switching the display state of the interaction content to a preconfigured second display state.

4. The method of claim 3, **characterized in that** after obtaining the reply content generated based on the target interaction topic in response to the trigger on the content collection control, the method further comprises:
displaying a content presenting page in response to a trigger on the completion control, wherein the content presenting page comprises the target interaction topic and the interaction content in the second display state.

5. The method of claim 4, **characterized in that** the content presenting page comprises a preconfigured sharing control;
wherein after displaying the content presenting page in response to the trigger on the completion control, the method further comprises:
generating, in response to a trigger on the sharing control, content to be shared based on the target interaction topic and the reply content, and displaying a first user list, wherein the first user list comprises identification information of a plurality of users having a preconfigured association with the first user; and
in response to a selection in the first user list, sharing the content to be shared to a conversation page corresponding to at least one target user selected by the first user, the reply content in the content to be shared being displayed in a preconfigured first display state in the conversation page.

6. The method of claim 5, **characterized in that** a preconfigured second interaction control is displayed in a display area associated with each user in the first user list, and the sharing the content to be shared to the conversation page corresponding to the at least one target user selected by the first user in response to the selection of in the first user list by the first user comprises:
in response to a trigger on the second interaction control associated with the at least one user in the first user list, sharing the content to be shared to the conversation page corresponding to the at least one target user selected by the first user.

7. The method of claim 3, **characterized in that** after sending the reply content to the conversation page in response to the trigger on the completion control, the method further comprises:
generating, in response to a preconfigured trigger on the reply content, content to be shared based on the target interaction topic and the reply content, and displaying a first user list, wherein the first user list comprises identification information of a plurality of users having a preconfigured association with the first user; and
in response to a selection in the first user list, sharing the content to be shared to a conversation page corresponding to at least one target user selected by the first user, the reply content in the content to be shared being displayed in a preconfigured first display state in the conversation page.

8. The method of any one of claims 1 to 6, **characterized in that** displaying the content to be exchanged sent by any second user in the conversation page between the first user and the at least one second user comprises:
obtaining prompt information associated with the target interaction topic; and
displaying, in response to a trigger on the prompt information, the content to be exchanged sent by any second user in the conversation page between the first user and the at least one second user.

9. A method for content interaction, applicable to a client of a second user, **characterized by** comprising:
displaying a content generation page in response to a preconfigured trigger in a conversation page with a first user;
obtaining content to be exchanged generated in the content generation page, wherein the content to be exchanged comprises a target interaction topic and interaction content corresponding to the target interaction topic; and
sending the content to be exchanged to the conversation page in response to a sending operation, to cause the second user to switch a display state of the interaction content from a preconfigured first display state to a preconfigured second display state based on reply content generated based on the target interaction topic.

10. The method of claim 9, **characterized in that** the conversation page comprises a trigger control corresponding to the content interaction, and displaying the content generation page in response to the preconfigured trigger in the conversation page with the first user comprises:
displaying the content generation page in response to a trigger on the trigger control; or
the conversation page comprises a preconfigured function control, and displaying the content generation page in response to the preconfigured trigger in the conversation page with the first user comprises:
displaying a preconfigured function list in response to a trigger on the function control, wherein the function list at least comprises the trigger control corresponding to the content interaction; and
displaying the content generation page in response to a trigger on the trigger control.

11. The method of claim 9, **characterized in that** the content generation page comprises a first generation control for generating the target interaction topic and a second generation control for generating the interaction content; wherein obtaining the content to be exchanged generated in the content generation page comprises:
generating the target interaction topic in response to a trigger on the first generation control; and
in response to a trigger on the second generation control, obtaining the interaction content generated by the second user based on the target interaction topic.

12. The method of claim 11, **characterized in that** generating the target interaction topic in response to the trigger on the first generation control comprises:
obtaining the target interaction topic input via a preconfigured input control in response to the trigger on the first generation control; or
the content generation page further comprises a switching control, and generating the target interaction topic in response to the trigger on the first generation control comprises:
displaying any preconfigured interaction topic in response to the trigger on the first generating control; and
in response to the trigger on the first generation control, switching a currently displayed interaction topic based on the preconfigured interaction topic until the first generation control is stopped from being triggered and the target interaction topic is obtained.

13. The method of claim 12, **characterized in that** the preconfigured interaction topic comprises at least a plurality of interaction topics associated with respective specific occasions.

14. The method of claim 13, **characterized in that** displaying any preconfigured interaction topic in response to the trigger on the first generative control comprises:
determining a specific occasion corresponding to the current date; and
in response to the trigger on the first generation control, displaying any preconfigured interaction topic associated with the specific occasion, and displaying a display background associated with the specific occasion.

15. The method of claim 12, **characterized in that** after randomly displaying any preconfigured interaction topic in response to the trigger on the first generative control, the method further comprises:
displaying a display background corresponding to the interaction topic; and
switching the current display background in response to a trigger on the switching control.

16. The method of claim 9, **characterized in that** the content generating page comprises a preconfigured sending control; and sending the content to be exchanged to the conversation page in response to the triggered sending operation comprises:
sending the content to be exchanged to the conversation page in response to a trigger on the sending control.

17. The method of any one of claims 9 to16, **characterized in that** the content generation page further comprises a preconfigured third interaction control;
after obtaining the content to be exchanged generated in the content generation page, the method further comprises:
displaying a preconfigured second user list in response to a trigger on the third interaction control, wherein the second user list comprises identification information of a plurality of users having a preconfigured association with the second user;
determining at least one selected user to be interacted in response to a selection in the second user list; and
in response to a trigger on a preconfigured sending control in the list, sending the content to be exchanged to a conversation page corresponding to each to-be-interacted user, respectively.

18. The method of any one of claims 9 to 16, **characterized in that** after sending the content to be exchanged to the conversation page in response to the sending operation, the method further comprises:
determining an exchange progress corresponding to the content to be exchanged; and
displaying progress prompt information corresponding to the exchange progress according to the exchange progress.

19. The method of claim 18, **characterized in that** after sending the content to be exchanged to the conversation page in response to the sending operation, the method further comprises:
displaying a message page in response to a trigger on a trigger control corresponding to the message page;
and
displaying message reminder information corresponding to the exchange progress in the display area associated with the first user in the message page according to the exchange progress corresponding to the content to be exchanged.

20. The method of any one of claims 9 to 16, **characterized in that** after sending the content to be exchanged to the conversation page in response to the sending operation, the method further comprises:
determining an interaction by any user having an association with the second user on the interaction content corresponding to the content to be exchanged, and displaying interaction reminder information corresponding to the interaction; and
the interaction comprises at least one of like, a collect, or comment.

21. The method of any one of claims 9 to 16, **characterized in that** after sending the content to be exchanged to the conversation page in response to the sending operation, the method further comprises:
determining first interaction information corresponding to the content to be exchanged, wherein the first interaction information is generated after the at least one first user performs an interaction on the content to be exchanged; and
displaying the content to be exchanged and the first interaction information corresponding to the content to be exchanged in a content presenting page and/or the conversation page;
wherein the interaction comprises at least one of like, collect, and comment.

22. The method of any one of claims 9 to 16, **characterized by** further comprising:
displaying, in the conversation page, reply content generated by the first user based on the content to be exchanged;
determining second interaction information corresponding to the reply content, wherein the second interaction information is generated after at least one user having a preconfigured association with the first user performs an interaction on the reply information; and
displaying the reply content and the second interaction information corresponding to the reply content in the content presenting page and/or the conversation page;
wherein the interaction operation comprises at least one of like, collect, and comment.

23. An apparatus for content interaction, applicable to a client of a first user, **characterized by** comprising:
a first displaying module, configured to display, in a conversation page between the first user and at least one second user, content to be exchanged sent by any second user, wherein the content to be exchanged comprises a target interaction topic and interaction content in a first display state corresponding to the target interaction topic;
an obtaining module, configured to display a content obtaining page in response to a preconfigured trigger on the content to be exchanged; and
a switching module, configured to switch the interaction content from the first display state to a second display state according to reply content generated based on the target interaction topic in the content obtaining page.

24. An apparatus for content interaction, applicable to a client of a second user, **characterized by** comprising:
a second displaying module, configured to display a content generation page in response to a preconfigured trigger in a conversation page with a first user;
a generation module, configured to obtain content to be exchanged generated in the content generation page, wherein the content to be exchanged comprises a target interaction topic and interaction content corresponding to the target interaction topic; and
a sending module, configured to send the content to be exchanged to the conversation page in response to a sending operation, to cause the second user to switch a display state of the interaction content from a preconfigured first display state to a preconfigured second display state based on reply content generated based on the target interaction topic.

25. An electronic device, **characterized by** comprising: a processor and a memory;
the memory storing computer executable instructions; and
the processor executing the computer-executable instructions stored in the memory, so that the processor is configured with the method for content interaction of any one of claims 1 to 8 or 9 to 22.

26. A computer-readable storage medium, **characterized in that** the computer-readable storage medium stores computer-executable instructions, and when the processor executes the computer-executable instructions, the method for content interaction of any one of claims 1 to 8 or 9 to 22 is implemented.

27. A computer program product, **characterized by** comprising a computer program, wherein the computer program is executed by a processor to configure the method for content interaction of any one of claims 1 to 8 or 9 to 22.
